# EUROPÄISCHE PATENTSCHRIFT

(11) **EP 0 880 802 B1**
(45) Veröffentlichungstag und Bekanntmachung des Hinweises auf die Patenterteilung: **14.06.2000**
(21) Anmeldenummer: 97914102.5
(22) Anmeldetag: 30.01.1997
(51) Int. Cl.: H01M 8/02, H01M 8/12

(54) **HOCHTEMPERATUR-BRENNSTOFFZELLE UND -STAPEL MIT METALLISCHEN VERBUNDLEITERPLATTEN**
HIGH-TEMPERATURE FUEL CELL AND HIGH-TEMPERATURE FUEL CELL STACK WITH METALLIC COMPOSITE CONDUCTING STRUCTURES
CELLULES ELECTROCHIMIQUES HAUTE TEMPERATURE ET EMPILEMENT DE CELLULES ELECTROCHIMIQUES A STRUCTURES CONDUCTRICES COMPOSITES METALLIQUES

(30) Priorität: 12.02.1996 DE 19605086
(43) Veröffentlichungstag der Anmeldung: 02.12.1998
(73) Patentinhaber: SIEMENS AKTIENGESELLSCHAFT, 80333 München (DE)
(72) Erfinder: GREINER, Horst, D-91301 Forchheim (DE)
(86) Internationale Anmeldenummer: DE9700183
(87) Internationale Veröffentlichungsnummer: WO9730485

(56) Entgegenhaltungen:
- EP-A- 0 410 166
- EP-A- 0 414 270
- EP-A- 0 432 381
- EP-A- 0 440 968
- EP-A- 0 446 680
- EP-A- 0 670 606
- DE-A- 3 918 115
- DE-C- 4 410 711
- US-A- 3 516 865
- PATENT ABSTRACTS OF JAPAN vol. 095, no. 009, 31.Oktober 1995 & JP 07 145454 A (SUMITOMO SPECIAL METALS CO LTD), 6.Juni 1995, & DATABASE WPI Derwent Publications Ltd., London, GB; AN 95-237398 & CHEMICAL ABSTRACTS, vol. 123, no. 18, 30.Oktober 1995 Columbus, Ohio, US; abstract no. 233343,
- PATENT ABSTRACTS OF JAPAN vol. 095, no. 009, 31.Oktober 1995 & JP 07 166301 A (TOKYO GAS CO LTD), 27.Juni 1995, & DATABASE WPI Derwent Publications Ltd., London, GB; AN 95-261662 & CHEMICAL ABSTRACTS, vol. 123, no. 22, 27.November 1995 Columbus, Ohio, US; abstract no. 291799,
- PATENT ABSTRACTS OF JAPAN vol. 018, no. 324 (E-1564), 20.Juni 1994 & JP 06 076842 A (MITSUBISHI HEAVY IND LTD), 18.März 1994,
- BERICHTE DER BUNSEN-GESELLSCHAFT FUR PHYSIKALISCHE CHEMIE, Bd. 94, Nr. 9, 1.September 1990, Seiten 978-981, XP000500109 IVERS-TIFFEE E ET AL: "CERAMIC AND METALLIC COMPONENTS FOR A PLANAR SOFC"

## Beschreibung

Die Erfindung bezieht sich auf eine Hochtemperatur-Brennstoffzelle und einen Hochtemperatur-Brennstoffzellenstapel.

Bei einem Hochtemperatur-Brennstoffzellenstapel aus Hochtemperatur-Brennstoffzellen, in der Fachliteratur wird ein Brennstoffzellenstapel auch "Stack" genannt, liegen unter einer oberen Verbundleiterplatte, welche den Hochtemperatur-Brennstoffzellenstapel abdeckt, der Reihenfolge nach eine Kontaktschicht, ein Elektrolyt-Elektroden-Element, eine weitere Verbundleiterplatte usw. aufeinander. Das Elektrolyt-Elektroden-Element umfaßt dabei zwei Elektroden und einen zwischen den beiden Elektroden angeordneten Elektrolyten. Die Verbundleiterplatten innerhalb des Hochtemperatur-Brennstoffzellenstapels sind dabei als bipolare Platten ausgeführt. Diese sind im Gegensatz zu einer am Rande des Hochtemperatur-Brennstoffzellenstapels angeordneten Verbundleiterplatte auf beiden Seiten mit Kanälen für die Versorgung der Elektrolyt-Elektroden-Elemente mit jeweils einem Betriebsmittel versehen.

Dabei bilden jeweils ein zwischen zwei benachbarten Verbundleiterplatten liegendes Elektrolyt-Elektroden-Element, einschließlich der beidseitig am Elektrolyt-Elektroden-Element unmittelbar anliegenden Kontaktschicht und der an der Kontaktschicht anliegenden Seiten jeder der beiden Verbundleiterplatten, zusammen eine Hochtemperatur-Brennstoffzelle.

Diese und weitere Typen von Brennstoffzellen sind beispielsweise aus dem "Fuel Cell Handbook" von A. J. Appelby und F. R. Foulkes, 1989, Seiten 442 bis 454, oder aus dem Aufsatz "Brennstoffzellen als Energiewandler", Energiewirtschaftliche Tagesfragen, Juni 1993, Heft 6, Seiten 382 bis 390, bekannt. In der Regel setzt sich ein Hochtemperatur-Brennstoffzellenstapel aus einer Vielzahl von Hochtemperatur-Brennstoffzellen zusammen. Dementsprechend müssen eine Vielzahl von Elektrolyt-Elektroden-Elementen mit Verbundleiterplatten gasdicht, d.h. mit anderen Worten stoffschlüssig, verbunden werden. Die Verbundleiterplatten innerhalb des Hochtemperatur-Brennstoffzellenstapels, d.h. die bipolaren Platten haben somit die Aufgabe die Elektrolyt-Elektroden-Elemente miteinander elektrisch in Serie zu schalten und die Elektroden der Elektrolyt-Elektroden-Elemente mit Betriebsmitteln zu versorgen. Die Verbundleiterplatten zum Abschließen des Hochtemperatur-Brennstoffzellenstapels unterscheiden sich von den bipolaren Platten dadurch, daß diese Verbundleiterplatten nur auf einer Seite mit Kanälen für die Versorgung der Elektrolyt-Elektroden-Elemente mit Betriebsmitteln versehen sind und daß der in den Hochtemperatur-Brennstoffzellen erzeugte Strom über diese Verbundleiterplatten aus dem Hochtemperatur-Brennstoffzellenstapel abgeführt und nicht einer weiteren Hochtemperatur-Brennstoffzelle zugeführt wird.

Hochtemperatur-Brennstoffzellen mit einem ähnlichen Aufbau sind außerdem aus den deutschen Offenlegungsschriften 44 06 276, 41 32 584, 39 35 722, 39 22 673, aus dem Deutschen Patent 44 00 540 und aus der europäischen Patentanmeldung 05 78 855 bekannt.

Um mechanische Spannungen in dem Hochtemperatur-Brennstoffzellenstapel, insbesondere bei zwangsläufig auftretenden Thermozyklen zu vermeiden, sind Materialien für die Verbundleiterplatten entwickelt worden, deren mittlerer thermischer Ausdehnungskoeffizient angenähert mit dem der Elektrolytfolien übereinstimmt. Entwickelt wurden keramische Materialien im System LaCrO₃ und metallische Werkstoffe auf Cr-Basis. Beide Werkstoffe sind in der Anschaffung kostenintensiv. Aufgrund des hohen Volumenanteils der Verbundleiterplatten in einem Hochtemperatur-Brennstoffzellenstapel, dominieren die Kosten für die Verbundleiterplatten bei den Gesamtkosten für den Hochtemperatur-Brennstoffzellenstapel.

Der Erfindung liegt somit die Aufgabe zugrunde, eine Hochtemperatur-Brennstoffzelle anzugeben, bei der die Werkstoffkosten für die Verbundleiterplatte gegenüber denen aus dem Stand der Technik bekannten deutlich reduziert sind. Außerdem soll ein sich aus solchen Hochtemperatur-Brennstoffzellen zusammensetzender Hochtemperatur-Brennstoffzellenstapel angegeben werden.

Die erstgenannte Aufgabe wird gemäß der Erfindung gelöst durch eine Hochtemperatur-Brennstoffzelle, bei der zwei Elektroden zwischen Verbundleiterplatten zum Abführen des in der Hochtemperatur-Brennstoffzelle erzeugten Stromes und zum Versorgen der Elektroden mit einem Betriebsmittel angeordnet sind, wobei eine der beiden Elektroden wenigstens 100µm und die andere angenähert 30µm dick ist, und ein zwischen den beiden Elektroden angeordneter Elektrolyt stabilisiertes ZrO₂ enthält und eine Dicke zwischen 5 und 30µm aufweistwenigstens eine Verbundleiterplatte wenigstens zum Teil aus einer Legierung auf Fe-Basis mit einem Cr-Gehalt zwischen 17 und 30Gew% besteht, die im Temperaturbereich von Raumtemperatur bis 900°C einen mittleren thermischen Ausdehnungskoeffizienten zwischen 13 und 14x10⁻⁶/K aufweist, der dem thermischen Ausdehnungskoeffizienten des Elektrolyt-Elektroden-Elements angepaßt ist.

Die zweitgenannte Aufgabe wird gemäß der Erfindung gelöst durch einen Hochtemperatur-Brennstoffzellenstapel, der sich aus einer Anzahl dieser Hochtemperatur-Brennstoffzellen zusammensetzt.

Durch die Verwendung dieser Legierung als Werkstoff für die Verbundleiterplatte reduzieren sich die Werkstoffkosten für die Verbundleiterplatte um den Faktor 10 bis 20 gegenüber den in dem Stand der Technik verwendeten Werkstoffen für die Herstellung von Verbundleiterplatten für die Hochtemperatur-Brennstoffzelle.

Mit der unterschiedlichen Wahl der Dicken für die beiden Elektroden wird die Stabilität des Elektrolyt-Elektroden-Elements erhöht. Das Elektrolyt-Elektroden-Element, das die beiden Elektroden und den Elektrolyten umfaßt, wird somit durch eine der beiden Elektroden aufgrund ihrer Dicke gestützt. Diese Elektrolyt-Elektroden-Elemente bieten technische Vorteile. Wegen der geringen Elektrolytdichte, die einen niedrigen Elektrolytwiderstand zur Folge hat, ist insbesondere eine Absenkung der Betriebstemperatur der Hochtemperatur-Brennstoffzelle auf 750°C ohne gravierende Leistungsverluste möglich. Auch kostenseitig ergeben sich Vorteile, da der kostenintensive Anteil an Elektrolytmasse im Vergleich zu den im Stand der Technik verwendeten dickeren Elektrolyten abnimmt.

Insbesondere besteht die als Kathode vorgesehene Elektrode aus LaSrMnO₃.

In einer weiteren Ausgestaltung besteht die als Anode vorgesehene Elektrode aus Ni/ZrO₂-Cermet.

Zur weiteren Erläuterung der Erfindung wird auf das Ausführungsbeispiel der Zeichnung verwiesen. Es zeigen:
- FIG 1: einen Querschnitt durch eine Hochtemperatur-Brennstoffzelle in schematischer Darstellung;
- FIG 2: einen Querschnitt durch einen Hochtemperatur-Brennstoffzellenstapel, der sich aus einer Vielzahl von Hochtemperatur-Brennstoffzellen zusammensetzt, in schematischer Darstellung.

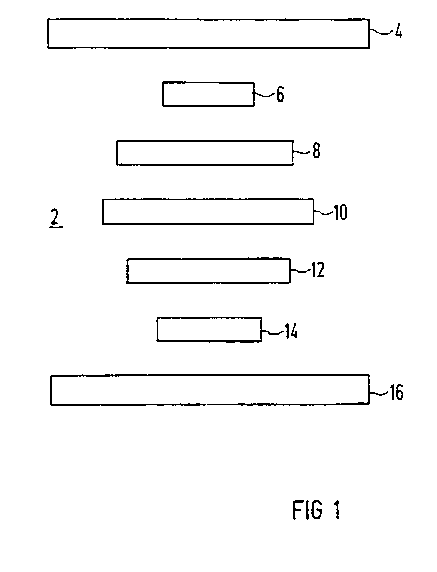

Gemäß FIG 1 umfaßt eine Hochtemperatur-Brennstoffzelle 2 eine Verbundleiterplatte 4, eine Kontaktschicht 6, eine als Kathode vorgesehene Elektrode 8, einen Elektrolyten 10, eine als Anode vorgesehene Elektrode 12, eine Kontaktschicht 14 und eine weitere Verbundleiterplatte 16, die in der angegebenen Reihenfolge aufeinandergestapelt sind. Die beiden Elektroden 8, 12 und der Elektrolyt 10 bilden das Elektrolyt-Elektroden-Element 8, 10, 12.

Die Verbundleiterplatten 4, 16 dienen hierbei als Deckplatten für die zwischen ihnen angeordneten Bauelemente 6, 8, 10, 12, 14. Über die Verbundleiterplatten 4, 16 wird der in der Hochtemperatur-Brennstoffzelle 2 erzeugte Strom aus derselbigen abgeführt. Außerdem versorgen die Verbundleiterplatten 4, 16 die Kathode 8 bzw. die Anode 12 jeweils mit einem Betriebsmittel.

Wenigstens eine der Verbundleiterplatten 4, 16 besteht wenigstens zum Teil, mit anderen Worten in einem Teilbereich, aus einer Legierung auf Fe-Basis mit einem Cr-Gehalt zwischen 17 und 30Gew.%. Die Kontaktschichten 6, 14 verhindern unter anderem ein Abdampfen des Chroms Cr aus den Verbundleiterplatten 4, 16.

Der mittlere thermische Ausdehnungskoeffizient der Verbundleiterplatten 4, 16 im Temperaturbereich von Raumtemperatur bis 900°C ist 13 bis 14x10⁻⁶/K. Damit liegt der mittlere thermische Ausdehnungskoeffizient der Verbundleiterplatten 4, 16 höher als bei den aus dem Stand der Technik bekannten Verbundleiterplatten. Demzufolge ist der Verbund aus den Bauelementen 6, 8, 10, 12, 14, der zwischen den Verbundleiterplatten 4, 16 angeordnet ist in seiner Kombination bezüglich Zusammensetzung und Dicke der verschiedenen Bauelemente 6, 8, 10, 12, 14 in seinem mittleren Ausdehnungskoeffizienten an den mittleren Ausdehnungskoeffizienten der Verbundleiterplatten 4, 16 angepaßt.

Aus diesem Grund besteht die als Kathode vorgesehene Elektrode 8 aus LaSrMnO₃ und die als Anode vorgesehene Elektrode 12 aus Ni/ZrO₂-Cermet. Das Elektrolyt-Elektroden-Element 8, 10, 12 hat somit ebenfalls einen mittleren thermischen Ausdehnungskoeffizienten von 13 bis 14x10⁻⁶/K.

Um mechanische Spannungen in der Hochtemperatur-Brennstoffzelle 2 zu vermeiden, ist außerdem die als Kathode vorgesehene Elektrode 8 in einer Dicke von wenigstens 100µm und die als Anode vorgesehene Elektrode 12 in einer Dicke von angenähert 30µm ausgeführt. Es ist ebenfalls möglich, das Dickenverhältnis zwischen Anode 12 und Kathode 8 umzukehren. In dieser Ausführungsform besteht der zwischen den beiden Elektroden 8, 12 angeordnete Elektrolyt 10 aus stabilisiertem ZrO₂. Der Elektrolyt 10 ist dabei in einer Dicke zwischen 5 und 30µm ausgebildet.

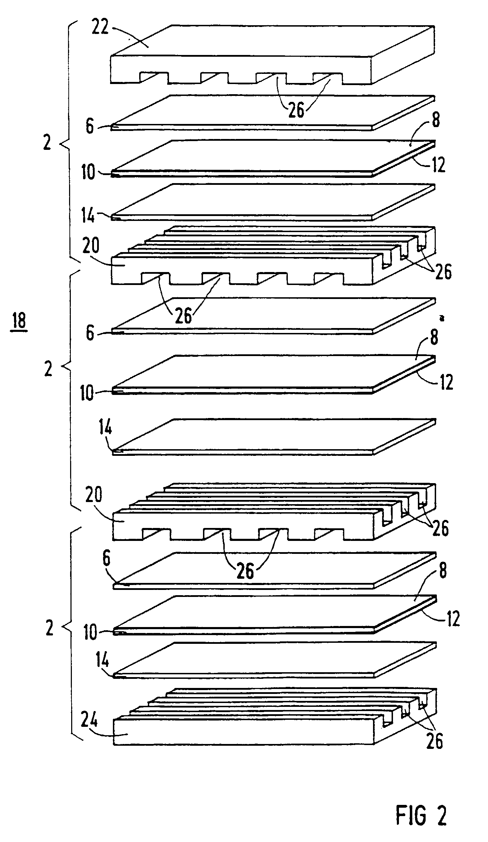

Die FIG 2 zeigt in einem Querschnitt den schematischen Aufbau eines Hochtemperatur-Brennstoffzellenstapels 18 aus Hochtemperatur-Brennstoffzellen 2, der in der dargestellten Ausführungsform drei Hochtemperatur-Brennstoffzellen 2 umfaßt, die jeweils die gleiche Aufbauweise wie die in Figur 1 dargestellte Hochtemperatur-Brennstoffzelle 2 haben.

Der Brennstoffzellenstapel 18 ist nach oben mit einer Verbundleiterplatte 22 und nach unten mit einer Verbundleiterplatte 24 abgeschlossen. Die Verbundleiterplatten 22, 24 übernehmen dabei die Funktion der in FIG 1 dargstellten Verbundleiterplatten 4, 16.

Die Verbundleiterplatten 20, die innerhalb des Hochtemperatur-Brennstoffzellenstapels 18 angeordnet sind, d.h. die nicht den Hochtemperatur-Brennstoffzellenstapel 18 in einer Richtung abschließen wie die Deckplatten 22 und 24, sind als bipolare Platten ausgeführt. Der obere Teil der Verbundleiterplatte 20 ist der als Anode vorgesehenen Elektroden 12 und der untere Teil der Verbundleiterplatte 20 der als Kathode vorgesehenen Elektrode 8 zugeordnet. In diesem Fall gehören die als Kathode vorgesehene Elektrode 8 und die als Anode vorgesehene Elektrode 12 jeweils zu benachbarten Hochtemperatur-Brennstoffzellen 2.

Die Verbundleiterplatten 20, 22, 24 sind jeweils mit Kanälen 26 versehen, die für die Versorgung der Hochtemperatur-Brennstoffzellen 2 mit Betriebsmitteln vorgesehen sind. Bei den Verbundleiterplatten 22, 24 sind jeweils nur eine Seite mit den Kanälen 26 versehen, währenddessen die Verbundleiterplatten 20 auf beiden Seiten mit den Kanälen 26 versehen sind.

Da sich der Hochtemperatur-Brennstoffzellenstapel 18 in der Regel aus einer Vielzahl von Hochtemperatur-Brennstoffzellen 2 zusammensetzt, sind dementsprechend auch eine Vielzahl von Verbundleiterplatten 20 innerhalb des Hochtemperatur-Brennstoffzellenstapels 18 vorhanden. Werden gemäß dieser Ausführungsform die Verbundleiterplatten 20 wenigstens in einem Teilbereich aus einer Legierung auf Fe-Basis mit einem Cr-Gehalt zwischen 17 und 30Gew.% hergestellt, so reduzieren sich die Kosten für den gesamten Hochtemperatur-Brennstoffzellenstapel 18 gegenüber den aus dem Stand der Technik bekannten Hochtemperatur-Brennstoffzellenstapeln wenigstens um den Faktor 10.

## Patentansprüche

1. Hochtemperatur-Brennstoffzelle (2), bei der zwei Elektroden (8, 12) zwischen Verbundleiterplatten (4, 16; 22, 20, 24) zum Abführen des in der Hochtemperatur-Brennstoffzelle (2) erzeugten Stromes und zum Versorgen der Elektroden (8, 12) mit einem Betriebsmittel angeordnet sind, bei der eine der beiden Elektroden (8, 12) wenigstens 100µm und die andere angenähert 30µm dick ist, und ein zwischen den beiden Elektroden (8, 12) angeordneter Elektrolyt (10) stabilisiertes ZrO₂ enthält und eine Dicke zwischen 5 und 30µm aufweist, wobei wenigstens eine Verbundleiterplatte (4, 16; 22, 20, 24) aus einer Legierung auf Fe-Basis mit einem Cr-Gehalt zwischen 17 und 30Gew% besteht, die im Temperaturbereich von Raumtemperatur bis 900°C einen mittleren thermischen Ausdehnungskoeffizienten zwischen 13 und 14x10⁻⁶/K aufweist, der dem thermischen Ausdehnungskoeffizienten des Elektrolyt-Elektroden-Elements (8, 10, 12) angepaßt ist.

2. Hochtemperatur-Brennstoffzelle (2) nach Anspruch 1,
**dadurch gekennzeichnet,** daß die als Kathode vorgesehene Elektrode (8) aus LaSrMnO₃ besteht.

3. Hochtemperatur-Brennstoffzelle (2) nach Anspruch 1 oder 2,
**dadurch gekennzeichnet,** daß die als Anode vorgesehene Elektrode (12) aus NilZrO₂-Cermet besteht.

4. Hochtemperatur-Brennstoffzelle (2) nach einem der Ansprüche 1 bis 3,
**dadurch gekennzeichnet,** daß der mittlere Ausdehnungskoeffizient des Elektrolyt-Elektroden-Elements (8, 10, 12) zwischen 13 und 14x10⁻⁶/K beträgt.

5. Hochtemperatur-Brennstoffzellenstapel (18), bei dem die Verbundleiterplatten (20) als bipolare Platten ausgeführt sind und der sich aus einer Anzahl von Hochtemperatur-Brennstoffzellen (2) nach einem der vorhergehenden Ansprüche zusammensetzt.

## Claims

1. High temperature fuel cell (2), in which two electrodes (8, 12) are arranged between interconnecting conducting plates (4, 16; 22, 20, 24) for leading off the current produced in the high temperature fuel cell (2) and for supplying the electrodes (8, 12) with a working medium, in which one of the two electrodes (8, 12) is at least 100 µm thick and the other is about 30 µm thick, and an electrolyte (10) arranged between the two electrodes (8, 12) contains stabilized ZrO₂ and has a thickness of between 5 and 30 µm, at least one interconnecting conducting plate (4, 16; 22, 20, 24) consisting of an alloy based on Fe with a Cr content of between 17 and 30% by weight, which in the temperature range from room temperature to 900°C has an average coefficient of thermal expansion of between 13 and 14x10⁻⁶/K which is matched to the coefficient of thermal expansion of the electrolyte/electrode element (8,10,12).

2. High temperature fuel cell (2) according to Claim 1, characterized in that the electrode (8) provided as the cathode consists of LaSrMnO₃.

3. High temperature fuel cell (2) according to Claim 1 or 2, characterized in that the electrode (12) provided as the anode consists of Ni/ZrO₂ cermet.

4. High temperature fuel cell (2) according to one of Claims 1 to 3, characterized in that the average coefficient of thermal expansion of the electrolyte/electrode element (8, 10, 12) is between 13 and 14×10⁻⁶/K.

5. High temperature fuel cell stack (18) in which the interconnecting conducting plates (20) are designed as bipolar plates, and which stack is composed of a number of high temperature fuel cells (2) according to one of the preceding claims.

## Revendications

1. Pile (2) à combustible à haute température, dans laquelle deux électrodes (8, 12) sont disposées entre des plaques (4, 16; 22, 20, 24) conductrices composites pour faire sortir le courant électrique produit dans la pile (2) à combustible à haute température, et pour alimenter les électrodes (8, 12) en un agent de fonctionnement, dans laquelle l'une des deux électrodes (8, 12) a une épaisseur d'au moins 100 µm et l'autre d'environ 30 µm, et un électrolyte (10) renferme du ZrO₂ stabilisé, interposé entre les deux électrodes (8, 12) et a une épaisseur comprise entre 5 et 30 µm, au moins une plaque conductrice (4, 16 ; 22, 20, 24) composite étant constituée d'un alliage à base de Fe ayant une teneur en Cr comprise entre 17 et 30 %, qui a dans l'intervalle de température allant de la température ambiante à 900°C, un coefficient moyen de dilatation thermique compris entre 13 et 14x10⁻⁶/K, qui est adapté au coefficient de dilatation thermique de l'élément (8, 10, 12) électrolyte-électrode.

2. Pile (2) à combustible à haute température suivant la revendication 1,
caractérisée en ce que l'électrode (8) prévue comme cathode est en LaSrMnO₃.

3. Pile (2) à combustible à haute température suivant la revendication 1 ou 2, caractérisée en ce que l'électrode (12) prévue comme anode est en un cermet de Ni/ZrO₂.

4. Pile (2) à combustible à haute température suivant la revendication 1 à 3, caractérisée en ce que le coefficient moyen de dilatation de l'élément (8, 10, 12) électrolyte-électrode est compris entre 13 et 14x10⁻⁶/K.

5. Empilement (18) de piles à combustible à haute température, dans lequel les plaques conductrices (20) composites sont des plaques bipolaires et qui se compose d'un certain nombre de piles (2) à combustible à haute température suivant l'une des revendications précédentes.
